# EUROPEAN PATENT APPLICATION

(11) **EP 4 683 134 A1**
(43) Date of publication of application: **21.01.2026**
(21) Application number: 24770939.7
(22) Date of filing: 13.03.2024
(51) Int. Cl.: H01R 35/04, H01R 4/58, H01R 43/20

(54) **LEAD BLOCK, ROTARY CONNECTOR DEVICE, AND METHOD FOR MANUFACTURING LEAD BLOCK**

(30) Priority: 15.03.2023 JP 2023040784; 15.03.2023 JP 2023040783
(71) Applicant: Furukawa Electric Co. Ltd., Tokyo 100-8322 (JP); Furukawa Automotive Systems Inc., Shiga 522-0242 (JP)
(72) Inventor: ARAKAWA Hayato, Inukami-gun, Shiga 522-0242 (JP); ADACHI Ryoichi, Inukami-gun, Shiga 522-0242 (JP); SHIOTANI Yoshihiro, Inukami-gun, Shiga 522-0242 (JP); NAMBU Shingo, Inukami-gun, Shiga 522-0242 (JP)
(74) Representative: Weickmann & Weickmann PartmbB
(86) International application number: PCT/JP2024/009827
(87) International publication number: WO 2024/190834

(57) **Abstract**

A lead block 30 includes a lead block body (31), a first bus bar (32A), and a second bus bar (32B). The first bus bar (32A) includes a first connection pin (33A) and a first conductor connecting portion (34A) exposed from the lead block body (31) to be electrically connected to the first conductor (71A) of the electric cable (71). The second bus bar (32B) includes a second connection pin (33B) and a second conductor connecting portion (72A) exposed from the lead block body (31) to be electrically connected to the second conductor (34B) of the electric cable (72).

## Description

### Technical Field

The technology disclosed in the present application relates to a lead block, a rotary connector device, and a lead block manufacturing method.

### Background Art

Patent Documents 1 and 2 describe a rotary connector device having a lead block in which a plurality of bus bars and a plurality of conductor connection portions are present on the same plane.

### Citation List

### Patent Literature

Patent Literature 1: Japanese Patent Application Publication No. 2000-323253
Patent Literature 2: International Publication No. 2022/260035

### Summary of the Invention

### Technical Problem

An object of the technology disclosed in the present application is to provide a lead block that is easy to assemble even when a plurality of bus bars and a plurality of conductor connection portions are not present on the same plane, and a method of manufacturing the lead block that is easy to assemble.

### Solution to Problem

In accordance with a first aspect, a lead block includes a lead block body, a first bus bar, and a second bus bar. a lead block body including an electrically insulating material; and the first bus bar and the second bus bar are partially disposed in the lead block body and include a conductive material. The first bus bar includes a first connection pin exposed from the lead block body to be electrically connectable to a connector of an external electric cable, and a first conductor connecting portion exposed from the lead block body to be electrically connected to a first conductor of an electric cable. The second bus bar includes a second connection pin exposed from the lead block body to be electrically connectable to the connector of the external electric cable, and a second conductor connecting portion exposed from the lead block body to be electrically connected to a second conductive portion of the electric cable. The first connection pin and the second connection pin are arranged in a first direction. The first conductor connecting portion includes a first exposed surface facing toward the first direction and a first connecting portion provided on the first exposed surface and configured to be electrically connected to the first conductor of the electric cable. The first conductor connecting portion includes a first exposed surface facing toward the first direction and a first connecting portion provided on the first exposed surface and configured to be electrically connected to the first conductor of the electric cable.

In the lead block according to the first aspect, the first conductor connecting portion and the second conductor connecting portion are exposed in the same direction as the arrangement direction of the first connection pin and the second connection pin, and the first connection pin and the second connection pin are not located on the same plane. Therefore, the first bus bar is bent between the first conductor connecting portion and the first connection pin, but the first conductor connecting portion and the second conductor connecting portion are on the same plane, and thus the first bus bar and the second bus bar can be easily positioned with respect to the lead block body with reference to the first conductor connecting portion and the second conductor connecting portion. Therefore, the lead block that is easy to assemble can be provided.

In accordance with a second aspect, in the lead block according to the first aspect, the first conductor connecting portion and the second conductor connecting portion are spaced apart from each other in a second direction perpendicular to the first direction.

In accordance with a second aspect, in the lead block according to the first aspect, the first conductor connecting portion and the second conductor connecting portion are spaced apart from each other in a second direction perpendicular to the first direction.

In accordance with a third aspect, the lead block according to the first and the second aspect includes a first main portion including the first exposed surface, and the first protruding portion protruding in the second direction from the first main portion toward the second conductor connecting portion. The second conductor connecting portion includes a second main portion including the second exposed surface, and a second protruding portion protruding in the second direction from the second main portion toward the first conductor connecting portion.

In the lead block according to the third aspect, the first conductor connecting portion and the second conductor connecting portion can be easily cut by the first protruding portion and the second protruding portion.

In accordance with a fourth aspect, in the lead block according to the third aspect, the first protruding portion has a width which is narrower than a width of the first main portion in a third direction perpendicular to the first direction and the second direction. The second protruding portion has a width which is narrower than a width of the second main portion in the third direction.

In the lead block according to the fourth aspect, it can be easily cut by reducing the cut width when cutting the first conductor connecting portion and the second conductor connecting portion by the first protruding portion and the second protruding portion.

In accordance with a fifth aspect, in the lead block according to the fourth or fifth aspect, the first protruding portion has a first cut surface, and the second protruding portion has a second cut surface.

In the lead block according to the fifth aspect, the first conductor connecting portion and the second conductor connecting portion are cut by the first protruding portion and the second protruding portion.

In accordance with a sixth aspect, in the lead block according to the first aspect, the first conductor connecting portion includes a first cut surface facing the second conductor connecting portion, and the second conductor connecting portion further includes a second cut surface facing the first cut surface and disposed apart from the first cut surface.

In the lead block according to the sixth aspect, the first conductor connecting portion and the second conductor connecting portion are cut by the first cut surface and the second cut surface.

In accordance with a seventh aspect, in the lead block according to any one of the first to sixth aspects, the first connection pin and the second connection pin protrude from the lead block body in the second direction.

In the lead block according to the seventh aspect, the connector of the external electric cable and the electric cable can be connected in a manner that the connector and the electric cable are less likely to interfere with each other.

According to an eighth aspect, in the lead block according to any one of the first to seventh aspects, the first conductor connecting portion includes a third protruding portion that protrudes from the first main portion in the third direction, and the second conductor connecting portion includes a fourth protruding portion that protrudes from the second main portion in the third direction.

In the lead block according to the fifth aspect, the first conductor connecting portion and the second conductor connecting portion are cut by the first protruding portion and the second protruding portion. In addition, the third protruding portion and the fourth protruding portion can be utilized as runners during punching.

According to a ninth aspect, in the lead block according to any one of the first to eighth aspects, the first bus bar is disposed to at least partially overlap the second bus bar when viewed in the first direction.

In the lead block according to the ninth aspect, the alignment of the first bus bar and the second bus bar can be efficiently performed by the member between the first bus bar and the second bus bar.

According to a tenth aspect, in the lead block according to any one of the first to ninth aspects, the lead block body has a through hole that is disposed between the first cut surface and the second cut surface when viewed in the first direction and penetrates in the first direction.

In the lead block according to the tenth aspect, the first conductor connecting portion and the second conductor connecting portion can be easily cut using the through hole.

According to an eleventh aspect, in the lead block according to any one of the first to tenth aspects, the first conductor connecting portion has a third exposed surface provided on a back side of the first exposed surface in the first direction. The second conductor connecting portion has a fourth exposed surface provided on a back side of the second exposed surface in the first direction. The lead block body has a third opening and a fourth opening. The first exposed surface and the second exposed surface are exposed from the lead block body when viewed in the first direction. The third exposed surface is exposed from the third opening when viewed in the first direction. The fourth exposed surface is exposed from the fourth opening when viewed in the first direction.

The lead block according to the eleventh aspect has an effect of dissipating heat by using the third opening and the fourth opening when the conductors are welded to the first conductor connecting portion and the second conductor connecting portion.

According to the twelfth aspect, in the lead block according to any one of the first to tenth aspects, the first bus bar includes a bent portion connected to the first conductor connecting portion and bent from the first conductor connecting portion toward the first direction.

In the lead block according to the twelfth aspect, not only the manufacturing process is simplified by utilizing bending, but also the lead block is formed by punching out the same conductive material, so that the waste of the conductive material can be reduced.

According to a thirteenth aspect, in the lead block according to the first aspect, the first bus bar further includes a first intermediate portion connecting the first connection pin and the first conductor connecting portion. The second bus bar further includes a second intermediate portion connecting the second connection pin and the second conductor connecting portion. The lead block body has a first opening. At least one of the first intermediate portion and the second intermediate portion is at least partially exposed from the first opening when viewed in the first direction.

In the lead block according to the thirteenth aspect, when the lead block body is molded, a jig for fixing at least one of the first intermediate portion and the second intermediate portion can be attached to the first opening, and thus the accuracy of alignment can be improved.

According to a fourteenth aspect, the lead block according to the thirteenth aspect has a first surface facing toward the first direction and a second surface facing toward the first direction. The second surface is provided on a back side of the first surface in the first direction. The first opening is provided on the first surface.

According to a fifteenth aspect, in the lead block according to the fourteenth aspect, the lead block body has a second opening provided on the second surface. At least one of the first intermediate portion and the second intermediate portion is at least partially exposed from the second opening when viewed in the first direction.

In the lead block according to the fourteenth and fifteenth aspects, at least one of the first intermediate portion and the second intermediate portion can be fixed to be sandwiched from both sides by the first opening and the second opening, and thus the accuracy of alignment can be further improved.

According to a sixteenth aspect, in the lead block according to any one of the thirteenth to fifteenth aspects, the first intermediate portion and the second intermediate portion are at least partially exposed from the first opening when viewed in the first direction.

In the lead block according to the sixteenth aspect, when one jig is inserted into each of the second openings, both of at least a part of the first intermediate portion and at least a part of the second intermediate portion can be fixed, and thus the number of work steps for alignment can be further reduced.

According to a seventeenth aspect, in the lead block according to the fifteenth aspect or the lead block according to the sixteenth aspect including the fifteenth aspect, the first intermediate portion is at least partially exposed from the second opening when viewed in the first direction. The second intermediate portion is not exposed from the second opening when viewed in the first direction.

In the lead block according to the seventeenth aspect, the amount of the electrically insulating material can be reduced as compared with the case where both at least a part of the first intermediate portion and at least a part of the second intermediate portion are fixed in the second opening as in the first opening, and therefore, the lead block can be manufactured at low cost.

According to an eighteenth aspect, in the lead block according to any one of the thirteenth to seventeenth aspects, the first conductor connecting portion and the second conductor connecting portion are spaced apart from each other in a second direction perpendicular to the first direction.

In the lead block according to the eighteenth aspect, the first conductor connecting portion and the second conductor connecting portion can be electrically insulated from each other by cutting the first conductor connecting portion and the second conductor connecting portion from each other in the second direction.

According to a nineteenth aspect, in the lead block according to any one of the thirteenth to eighteenth aspects, the first intermediate portion has a first dimension defined in a third direction perpendicular to the first direction and the second direction. The first connection pin has a width of a first pin defined in the third direction. The first width is greater than a width of the first pin.

In the lead block according to the nineteenth aspect, since the first width is larger than the first pin width, the first bus bar is easily fixed, and the accuracy of alignment of the first bus bar can be improved.

According to a twentieth aspect, in the lead block according to any one of the thirteenth to nineteenth aspects, the second intermediate portion has a second width defined in a third direction perpendicular to the first direction and the second direction. The second connection pin has a second pin width defined in the third direction. The second width is greater than the second pin width.

In the lead block according to the twentieth aspect, since the second width is larger than the second pin width, the second bus bar is easily fixed, and the accuracy of alignment of the second bus bar can be improved.

According to a twenty first aspect, in the lead block according to any one of the thirteenth to twentieth aspects, the first connection pin and the second connection pin protrude from the lead block body in the second direction.

In the lead block according to the twenty first aspect, the connector of the external electric cable and the electric cable can be connected in a manner that the connector and the electric cable are less likely to interfere with each other.

According to a twenty second aspect, in the lead block according to any one of the thirteenth to twenty first aspects, the first bus bar is disposed to at least partially overlap the second bus bar when viewed in the first direction.

In the lead block according to the twenty second aspect, the alignment of the first bus bar and the second bus bar can be efficiently performed by the member between the first bus bar and the second bus bar.

According to a twenty third aspect, in the lead block according to the sixteenth aspect, the first intermediate portion exposed from the first opening is disposed so as to at least partially overlap the second intermediate portion when viewed in the first direction.

In the lead block according to the twenty third aspect, the electrically insulating material is molded in the region where the first intermediate portion and the second intermediate portion overlap each other and which can be visually recognized from the first opening, so that the first bus bar and the second bus bar are more firmly fixed to each other, and the alignment between the first bus bar and the second bus bar can be further improved.

According to a twenty fourth aspect, a lead block manufacturing method includes preparing a flat plate made of a conductive material and having a longitudinal direction, a lateral direction, and a thickness direction perpendicular to each other. The method includes punching a bar assembly from a flat plate, the bar assembly including: a first bus bar; a second bus bar; and a coupling portion, the first bus bar including: a first connection pin extending in a longitudinal direction and electrically connectable to a connector of an external electric cable; a first conductor connecting portion configured to be electrically connect to the conductor of the electric cable; a bent portion extending from the first conductor connecting portion in the lateral direction; and an intermediate portion extending from the bent portion in the longitudinal direction to couple the first connection pin and the first conductor connecting portion, the second bus bar including: a second connection pin extending in the longitudinal direction and electrically connectable to a connector of the external electric cable; a second conductor connecting portion configured to be electrically connected to a second conductor of the electric cable; and a second intermediate portion extending in the longitudinal direction to couple the second connection pin and the second conductor connection portion, the coupling portion being configured to couple the first conductor connecting portion and the second conductor connecting portion, which has a width in the lateral direction shorter than a width of the first conductor connecting portion in the lateral direction and a width of the second conductor connecting portion in the lateral direction, the first connection pin and the second connection pin being aligned in the lateral direction in the bar assembly, the first conductor connecting portion, the coupling portion, and the second conductor connecting portion initial portion being aligned in the longitudinal direction in the bar assembly. The manufacturing method includes bending the bent portion of the bar assembly in the thickness direction to form the bar bent body. The manufacturing method includes placing the bar bent body in a mold that exposes at least a part of the coupling portion externally, and molding the lead block body by a resin containing the electrically insulating material. The manufacturing method includes cutting the coupling portion to electrically insulate the first bus bar and the second bus bar from each other.

In the lead block manufacturing method according to the twenty fourth aspect, the coupling portion is cut after the lead block body is molded, and thus the lead block body is easily molded, and the first bus bar and the second bus bar can be accurately aligned.

According to the twenty fifth feature, in the lead block manufacturing method according to the twenty fourth aspect, the bar assembly is formed such that a distance in the lateral direction between the first connection pin and the second connection pin, a distance in the lateral direction between the first intermediate portion and the second intermediate portion, and a distance in the longitudinal direction between the bent portion and the second conductor connecting portion are equal to or less than a distance in the longitudinal direction of the coupling portion.

In the lead block manufacturing method according to the twenty fifth aspect, the interval between the bus bars before punching can be narrowed, and therefore, the loss rate of the conductive material is small.

According to the twenty sixth aspect, in the lead block manufacturing method, the bar bent body is formed such that the first intermediate portion and the second intermediate portion partially overlap each other when viewed in the first direction in which the first connection pin and the second connection pin are arranged. The mold further exposes a first overlapping portion of the first intermediate portion overlapping with the second intermediate portion in the first direction, a first non-overlapping portion of the first intermediate portion adjacent to the first overlapping portion, and a part of the second intermediate portion externally. The lead block manufacturing method further includes fixing a portion of the second intermediate portion and the first non-overlapping portion by a first retainer. The lead block manufacturing method further includes fixing the first overlapping portion and the first non-overlapping portion by a second presser on an opposite side of the first presser in the first direction. The lead block manufacturing method further includes molding the lead block body by pouring resin into the mold and removing the mold, the first retainer, and the second retainer.

In the method for manufacturing the lead block according to the twenty sixth aspect, the first bus bar and the second bus bar are fixed by two retainers when the lead block body is molded, and are removed after the molding, and thus the lead block body is easily molded, and the first bus bar and the second bus bar can be accurately aligned.

According to a twenty seventh aspect, the rotary connector device includes a stator, a rotator, a lead block according to any one of the first to twenty third aspects, and an electric cable. The rotator is provided to be rotatable about the rotation axis with respect to the stator. The electric cable is electrically connected to the first connecting portion and the second connecting portion of the lead block.

The rotary connector device according to the twenty seventh aspect includes the lead block according to any one of the first to twenty seventh aspects, and thus the rotary connector device that is easy to assemble is provided.

According to a twenty eighth aspect, a rotary connector device includes a stator, a rotator, a lead block manufactured by the lead block manufacturing method according to any one of the twenty fourth to sixteenth aspects, and an electric cable. The rotator is provided to be rotatable about the rotation axis with respect to the stator. The electric cable is electrically connected to the first connecting portion and the second connecting portion of the lead block.

The rotary connector device according to the twenty eighth aspect includes the lead block manufactured by the lead block manufacturing method according to the twelfth or thirteenth aspect, and therefore, the rotary connector device that is easy to assemble is provided.

### [Effects of the Invention]

According to the technique disclosed in the present application, it is possible to provide the lead block that is easy to assemble and the method of manufacturing the lead block that is easy to assemble.

### Brief Description of the Drawings

FIG. 1 is a top of a rotary connector device according to an embodiment.
FIG. 2 is a cross-sectional view of the rotary connector device shown in FIG. 1.
FIG. 3 is a perspective view of a lead block.
FIG. 4 is a front view of the lead block.
FIG. 5 is a rear view of the lead block.
FIG. 6 is a perspective view of a first bus bar and a second bus bar excluding the lead block body.
FIG. 7 is a rear view of the first bus bar and the second bus bar excluding the lead block body.
FIG. 8 is a side view of the first bus bar and the second bus bar excluding the lead block body.
FIG. 9 is an enlarged view of a first conductor connecting portion side surface and a first cut surface as viewed from a second direction.
FIG. 10 is an enlarged view of a second conductor connecting portion side surface and a second cut surface as viewed from the second direction.
FIG. 11 is a cross-sectional view of the lead block taken along line IX-IX in FIGS. 4 and 5.
FIG. 12 is a flowchart showing a lead block manufacturing method shown in FIG. 3.
FIG. 13 is a plan view showing a cutting process shown in FIG. 12.
FIG. 14 is a diagram for explaining a fixing step by a first presser and a second presser in FIG. 12.

### DETAILED DESCRIPTION OF THE INVENTION

Hereinafter, embodiments will be described with reference to the drawings. In the figures, the same reference numerals indicate corresponding or identical features.

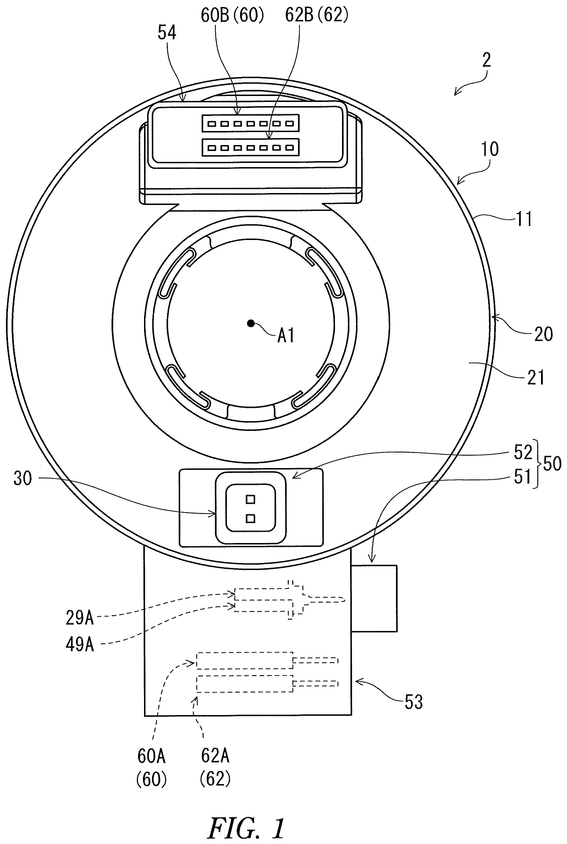

As shown in FIG. 1, the rotary connector device 2 includes a stator 10 and a rotator 20. The rotator 20 is rotatable about the rotation axis A1 with respect to the stator 10. The stator 10 is configured to be mounted to a vehicle body. The rotator 20 is configured to be coupled to a steering wheel.

The rotary connector device 2 includes a lead block 30. At least one of the stator 10 and the rotator 20 includes a connector holder 50. The lead block 30 is attachable to the connector holder 50.

In the present embodiment, the connector holder 50 includes a first connector holder 51 and a second connector holder 52 different from the first connector holder 51. The second connector holder 52 is disposed away from the first connector holder 51. The stator 10 includes a first connector holder 51. The rotator 20 includes a second connector holder 52.

The rotary connector device 2 further includes a third electric connector 60. In the present embodiment, the rotary connector device 2 includes a plurality of third electric connectors 60. The third electric connector 60 attached to the stator 10 may also be referred to as a third electric connector 60A. The third electric connector 60 attached to the rotator 20 may also be referred to as a third electric connector 60B. The total number of the third electric connectors 60 is not limited to two. The third electric connector 60 may be omitted from the rotary connector device 2. At least one of the third electric connectors 60A and 60B may be omitted from the rotary connector device 2.

The rotary connector device 2 includes a fourth electric connector 62. In the present embodiment, the rotary connector device 2 includes a plurality of fourth electric connectors 62. The fourth electric connector 62 attached to the stator 10 may also be referred to as a fourth electric connector 62A. The fourth electric connector 62 attached to the rotator 20 may also be referred to as a fourth electric connector 62B. The total number of the fourth electric connector 62 is not limited to two. The fourth electric connector 62 may be omitted from the rotary connector device 2. At least one of the fourth electric connectors 62A and 62B may be omitted from the rotary connector device 2.

The stator 10 includes a third connector holder 53. The third electric connector 60A is attachable to the third connector holder 53. The fourth electric connector 62A is attachable to the third connector holder 53.

The rotator 20 includes a fourth connector holder 54. The third electric connector 60B is attachable to the fourth connector holder 54. The third electric connector 60B is attachable to the fourth connector holder 54.

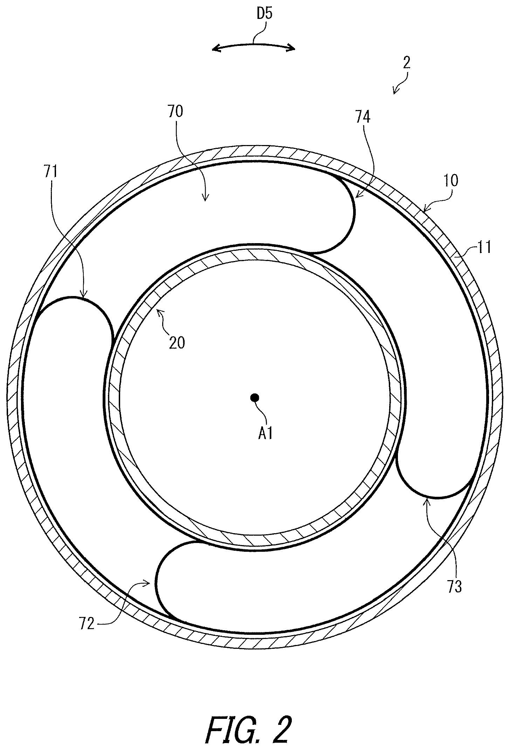

As shown in FIG. 2, the stator 10 and the rotator 20 form a cable accommodation space 70 provided so as to surround the rotation axis A1. For example, the cable accommodation space 70 is annular and extends in the circumferential direction D5 with respect to the rotation axis A1.

The rotary connector device 2 includes electric cables 71, 72, 73, and 74. The electric cables 71, 72, 73, and 74 are flexible. Examples of the electric cables 71, 72, 73, and 74 include flexible flat cables.

The first end of the electric cable 71 is electrically connected to the first electric connector 29A (see FIG. 1). A second end portion (a first conductive body 71A described later) of the electric cable 71 is electrically connected to the lead block 30 (referring to FIG. 1). The electric cable 71 electrically connects the first electric connector 29A and the lead block 30 (see FIG. 1). The first electric connector 29A is attachable to the first connector holder 51.

A first end of the electric cable 72 is electrically connected to the second electric connector 49A (see FIG. 1). A second end portion (a second conductive body 72A described later) of the electric cable 72 is electrically connected to the lead block 30 (referring to FIG. 1). The electric cable 72 electrically connects the second electric connector 49A and the lead block 30 (see FIG. 1). The second electric connector 49A is attachable to the first connector holder 51.

A first end of the electric cable 73 is electrically connected to the third electric connector 60A (see FIG. 1). A second end of the electric cable 73 is electrically connected to the third electric connector 60B (see FIG. 1). The electric cable 73 electrically connects the third electric connectors 60A and 60B (see FIG. 1).

A first end of the electric cable 74 is electrically connected to the fourth electric connector 62A (see FIG. 1). A second end of the electric cable 74 is electrically connected to the fourth electric connector 62B (see FIG. 1). The electric cable 74 electrically connects the fourth electric connectors 62A and 62B (see FIG. 1).

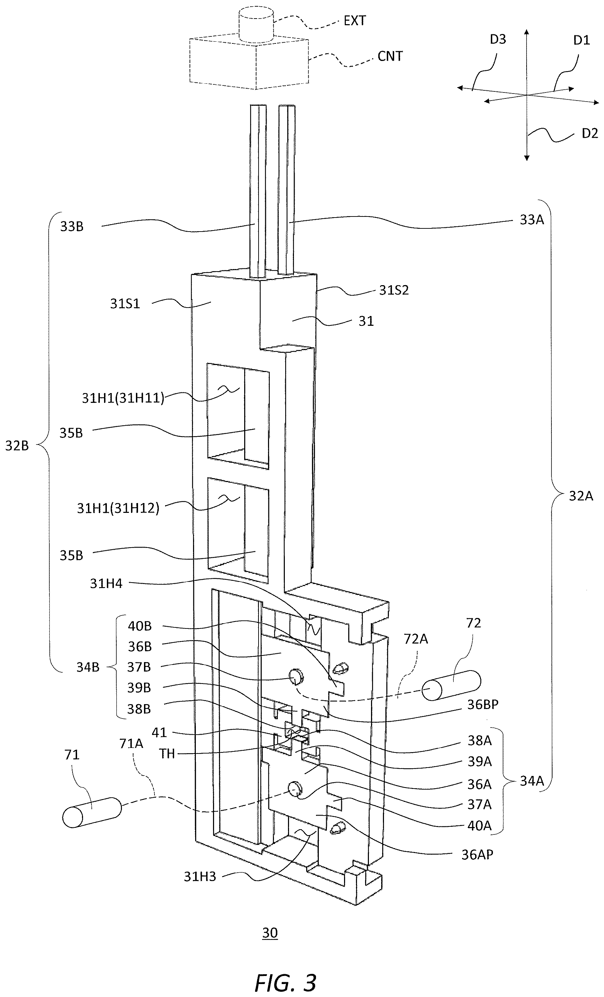

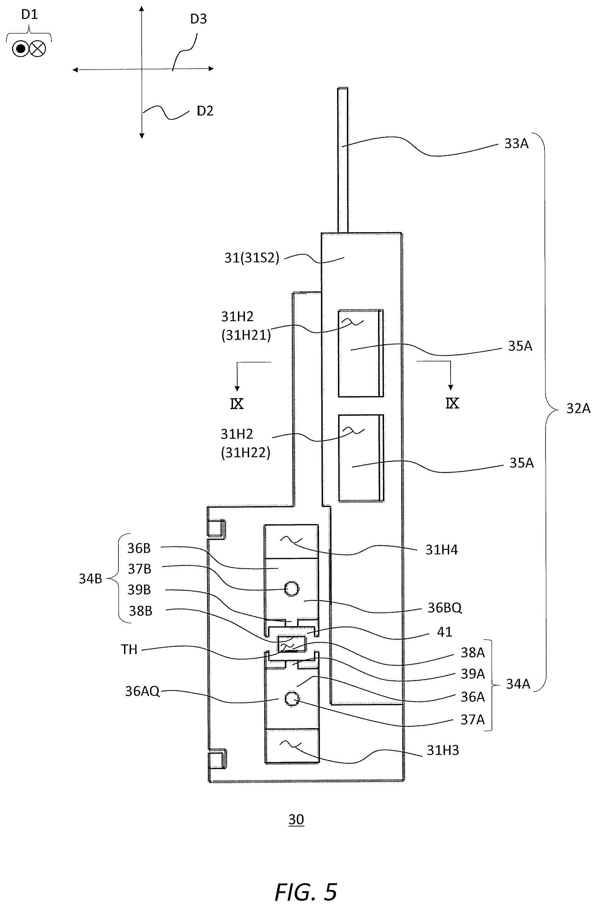

As shown in FIGS. 3 to 5, the lead block 30 includes a lead block body 31, a first bus bar 32A, and a second bus bar 32B. The lead block body 31 includes an electrical insulating material. The first bus bar 32A and the second bus bar 32B are partially disposed in the lead block body 31 and include a conductive material. The first bus bar 32A includes a first connection pin 33A, a first conductor connecting portion 34A, and a first intermediate portion 35A. The second bus bar 32B includes a second connection pin 33B, a second conductor connecting portion 34B, and a second intermediate portion 35B.

The first connection pin 33A is exposed from the lead block body 31, and is possible to electrically connect with the connector CNT (see FIG. 3) of the external electric cable EXT. The second connection pin 33B is exposed from the lead block body 31 and is possible to electrically connect with the connector CNT (see FIG. 3) of the external electric cable EXT. The first connection pin 33A and the second connection pin 33B are arranged in the first direction D1. The first connection pin 33A and the second connection pin 33B protrude from the lead block body 31 in a second direction D2 perpendicular to the first direction D1. The first conductor connecting portion 34A is exposed from the lead block body 31 to be electrically connected to the first conductor 71A of the electric cable 71. The second conductor connecting portion 34B is exposed from the lead block body 31 to be electrically connected to the second conductor 72A of the electric cable 72.

The first conductor connecting portion 34A and the second conductor connecting portion 34B are disposed apart from each other in the second direction D2. The first conductor connecting portion 34A includes a first main portion 36A, a first connecting portion 37A, a first cut surface 38A, a first protruding portion 39A, and the third protruding portion 40A. The second conductor connecting portion 34B includes a second main portion 36B, a second connecting portion 37B, a second cut surface 38B, a second protruding portion 39B, and a fourth protruding portion 40B.

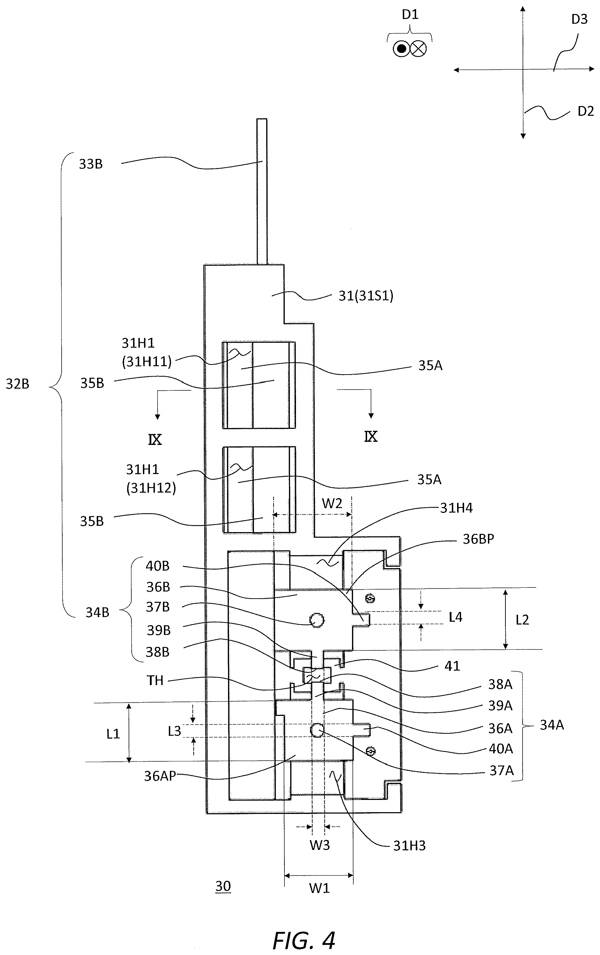

The first main portion 36A includes a first exposed surface 36AP and a third exposed surface 36AQ. The second main portion 36B includes a second exposed surface 36BP and a fourth exposed surface 36BQ. The first exposed surface 36AP, the second exposed surface 36BP, the third exposed surface 36AQ, and the fourth exposed surface 36BQ face the first direction D1. To be specific, each of the first exposed surface 36AP, the second exposed surface 36BP, the third exposed surface 36AQ, and the fourth exposed surface 36BQ is substantially a flat surface, and the normal direction thereof is substantially the first direction D1. Note that the third exposed surface 36AQ is provided on the back side of the first exposed surface 36AP in the first direction D1. The fourth exposed surface 36BQ is provided on the back side of the second exposed surface 36BP in the first direction D1. As shown in FIGS. 3 and 4, the first exposed surface 36AP and the second exposed surface 36BP are exposed from the lead block body 31 when viewed in the first direction D1.

The first connecting portion 37A is provided on the first exposed surface 36A and is configured to be electrically connected to the first conductive portion 71A of the electric cable 71. The first connecting portion 37A may be provided on the third exposed surface 36AQ. The second connecting portion 37B is provided on the second exposed surface 36B and is configured to be electrically connected to the second conductive portion 72A of the electric cable 72. The second connecting portion 37B may be provided on the fourth exposed surface 36BQ.

The first protruding portion 39A protrudes from the first main portion 36A toward the second conductor connecting portion 34B in the second direction D2. The first protruding portion 39A protrudes from the first main portion 36A toward the second conductor connecting portion 34B in the second direction D2. Referring to FIG. 4, the first protruding portion 39A has a third width W3, which is narrower than a first width W1 of the first main portion 36A, in a third direction D3 perpendicular to the first direction D1 and the second direction D2. The second protruding portion 39B has a width W3 that is narrower than the width W2 of the second main portion 36B in the third direction D3. The first protruding portion 39A has a first cut surface 38A. The second protruding portion 39B has a second cut surface 38B. The first cut surface 38A faces the second conductor connecting portion 34B. More particularly, the first cut surface 38A faces the second cut surface 38B in the second direction D2. The second cut surface 38B faces the first cut surface 38A and is arranged at a distance from the first cut surface 38A.

The third protruding portion 40A protrudes from the first main portion 36A toward the third direction D3. A length L3 of the second direction D2 of the third protruding portion 40A is shorter than the length L1 of the second direction D2 of the first main portion 36A. The fourth protruding portion 40B protrudes from the second main portion 36B toward the third direction D3. A length L4 of the second direction D2 of the fourth protruding portion 40B is shorter than the length L2 of the second direction D2 of the second main portion 36B. The third protruding portion 40A and the fourth protruding portion are clamped by the lead block body 31, so that the first conductor connecting portion 34A and the second conductor connecting portion 34B are firmly clamped by the lead block body 31. In addition, the third protruding portion and the fourth protruding portion can be utilized as runners during punching.

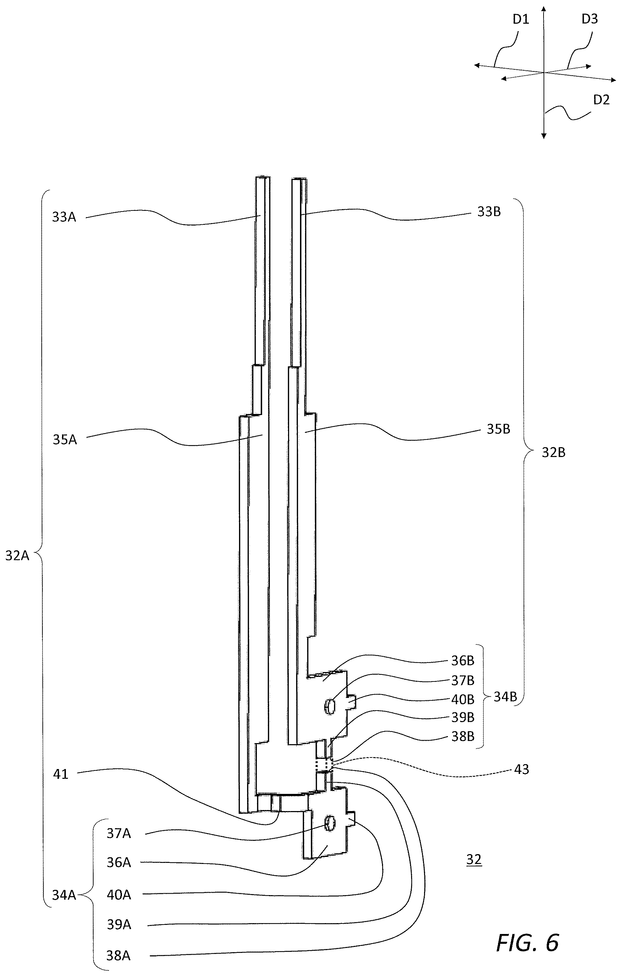

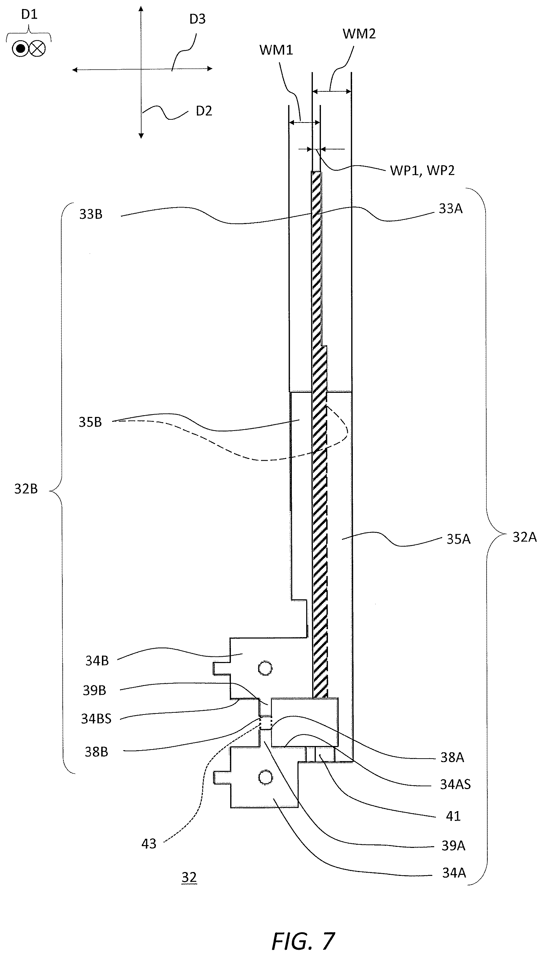

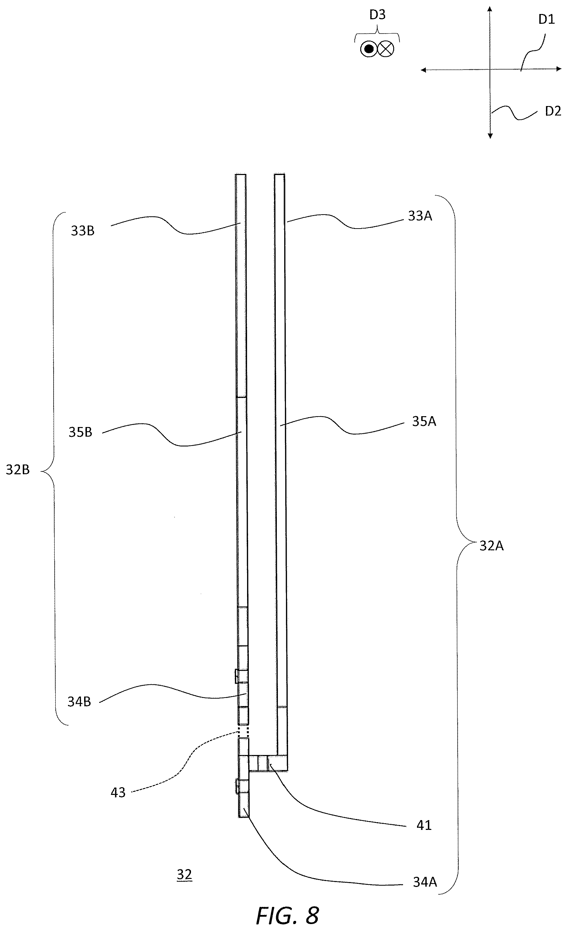

FIGS. 6 to 8 show the first bus bar 32A and the second bus bar 32B without the lead block body 31. Referring to FIGS. 6 to 8, the first intermediate portion 35A couples the first connection pin 33A and the first conductor connecting portion 34A. The second intermediate portion 35B couples the second connection pin 33B and the second conductor connecting portion 34B. Referring to FIG. 7, the first bus bar 32A is disposed to at least partially overlap the second bus bar 32B when viewed in the first direction D1. FIG. 7, the overlapping portions are indicated by hatching. To be specific, the first connection pin 33A overlaps the second connection pin 33B when viewed in the first direction D1. The first intermediate portion 35A partially overlaps the second main portion 36B when viewed in the first direction D1.

Referring to FIG. 7, the first intermediate portion 35A has a first width WM1 defined in a third direction D3 perpendicular to the first direction D1 and the second direction D2. The first connection pin 33A has a first pin width WP1 defined in the third direction D3. The first width WM1 is greater than the first pin width WP1. The second intermediate portion 35B has a second width WM2 defined in a third direction D3 perpendicular to the first direction D1 and the second direction D2. The second connection pin 33B has a second pin width WP2 defined in the third direction D3. The second width WM2 is greater than the second pin width WP2.

Further, referring to FIGS. 6 to 8, the first bus bar 32A includes a bent portion 41 that is coupled to the first conductor connecting portion 34A and is bent from the first conductor connecting portion 34A toward the first direction D1. The bent portion 41 is provided between the first conductor connecting portion 34A and the first intermediate portion 35A. The bent portion 41 is bent by about 90 degree at a portion adjacent to the first conductor connecting portion 34A and is bent by about 90 degree at a portion adjacent to the first intermediate portion 35A.

Referring to FIG. 7, the first conductor connecting portion 34A includes a first conductor connecting portion side surface 34AS. The first conductor connecting portion side surface 34AS couples the first exposed surface 36AP and the third exposed surface 36AQ. The second conductor connecting portion 34B includes a second conductor connecting portion side surface 34BS. The second conductor connecting portion side surface 34BS couples the second exposed surface 36BP and the fourth exposed surface 36BQ.

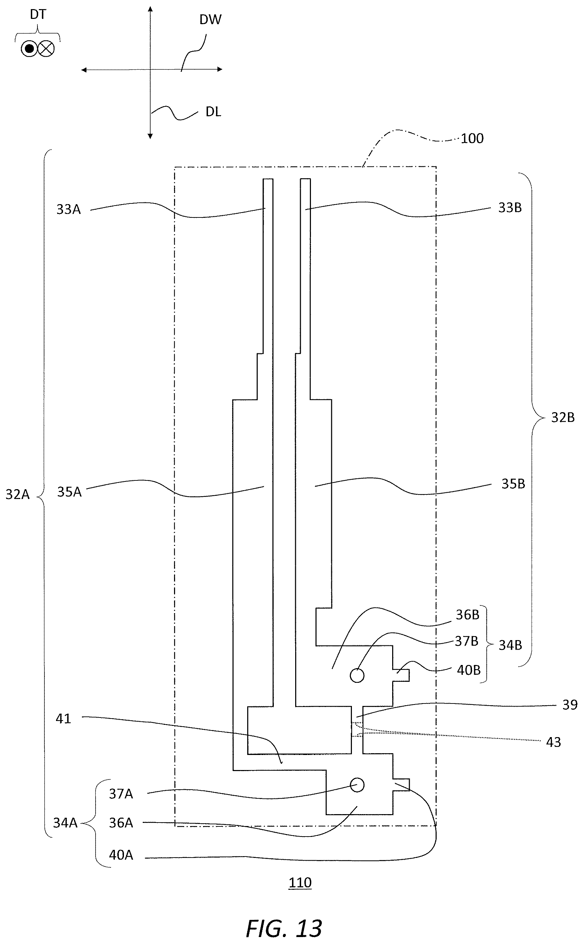

As described later, the first cut surface 38A is a surface formed when the cut surface 43 (see FIG.13) of a part of the connecting portion 39 is formed when the bar bent body 32 is cut. Whereas the first conductor connecting portion side surface 34AS is, for example, a surface formed by pressing (for example, shearing), the first cut surface 38A is a surface formed in a step different from that of the first conductor connecting portion side surface 34AS. The first cut surface 38A is, for example, a surface formed by pressing (for example, shearing), similarly to the first conductor connecting portion side surface 34AS.

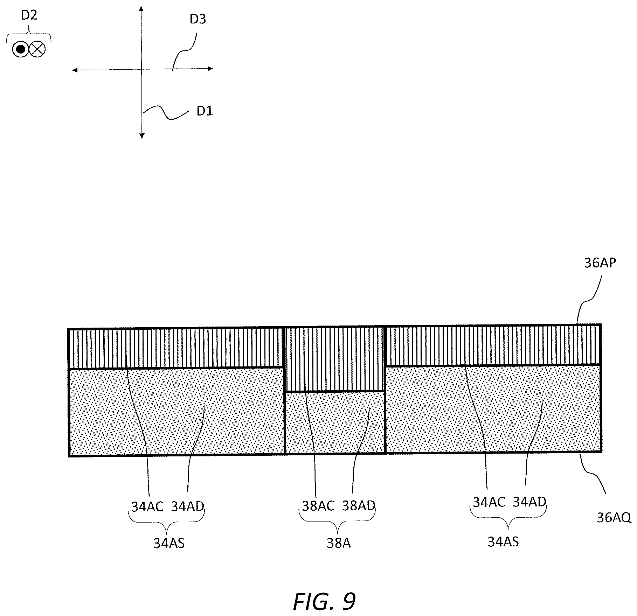

As shown in FIG. 9, the first conductor connecting portion side surface34A includes a shear surface 34AC and a fracture surface 34AD. The fracture surface 34AD is adjacent to the shear surface 34AC in the first direction D1. The shear surface 34AC is a surface formed by shearing a material by a punch and a die during shearing, and includes a plurality of streaks extending in one direction (for example, the first direction D1). The fracture surface 34AD is a surface formed by fracture after a part of the material is sheared by the punch and the die during the shearing process, and includes fine irregularities. Therefore, the appearance of the shear surface 34AC is different from the appearance of the fracture surface 34AD.

The first cut surface 38A includes a first shear surface 38AC and a first fracture surface 38AD. The first shear surface 38AC is adjacent to the first shear surface 38AC in the first direction D1. The first sheared surface 38AC is a surface formed by shearing a material by a punch and a die during shearing, and includes a plurality of streaks extending in one direction (for example, the first direction D1). The first fracture surface 38AD is a surface formed by fracture after a part of the material is sheared by the punch and the die during shearing, and includes fine irregularities. Therefore, the appearance of the first shear surface 38AC is different from the appearance of the first fracture surface 38AD.

As shown in FIG. 9, the length of the first shear surface 38AC in the first direction D1 is different from the length of the shear surface 34AC in the first direction D1. The length of the first fracture surface 38AD in the first direction D1 is different from the length of the fracture surface 34AD in the first direction D1. Therefore, the appearance of the first cut surface 38A is different from the appearance of the first conductor connecting portion side surface 34AS. The first cut surface 38A may be a surface finished after the coupling portion 39 is cut from the bar bent body 32. Similarly, the first conductor connecting portion side surface 34AS may be a surface that has been subjected to surface finishing. When the first cut surface 38A is provided with a surface finished, the first shear surface 38AC and the first fracture surface 38AD are at least partially replaced by the surface finished. When the first conductor connecting side 34AS is surface finished, the shear surface 34AC and the fracture surface 34AD are at least partially replaced by the surface finished. Therefore, the appearance of the first cut surface 38A may be the same as the appearance of the first conductor connecting portion side surface 34AS.

Similarly, the second cut surface 38B is a surface formed when a cut piece 43 (see FIG. 13, shown by dotted lines in FIGS. 6 to 8) of a part of the coupling portion 39 is cut from the bar bent body 32 at the time of manufacturing the lead block 30. Whereas the second conductor connecting portion side surface 34BS is, for example, a surface formed by press working (for example, shearing), the second cut surface 38B is a surface formed in a step different from that of the second conductor connecting portion side surface 34BS. The second cut surface 38B is, for example, a surface formed by press working (for example, shearing) similarly to the second conductor connecting portion side surface 34BS.

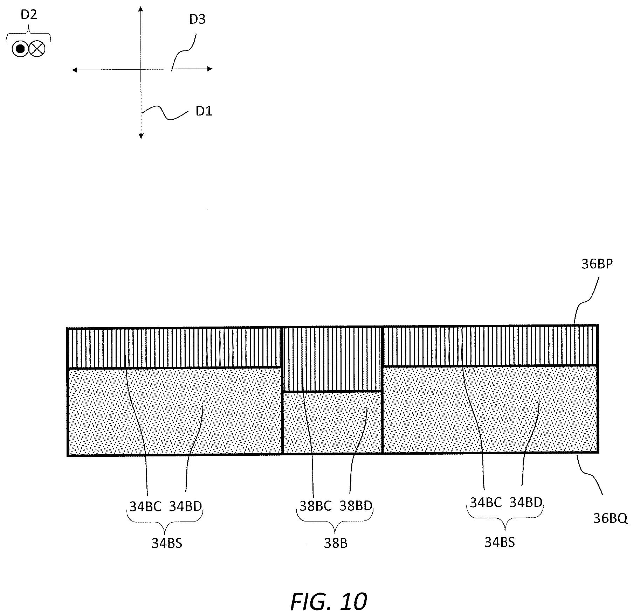

As shown in FIG. 10, the second conductor connecting portion side surface 34BS includes a shear surface 34BC and a fracture surface 34BD. The fracture surface 34BD is adjacent to the shear surface 34BC in the first direction D1. The shear surface 34BC is a surface formed by shearing a material by a punch and a die during shearing, and includes a plurality of streaks extending in one direction (for example, the first direction D1). The fracture surface 34BD is a surface formed by fracture after a part of the material is sheared by the punch and the die during the shearing process, and includes fine irregularities. Therefore, the appearance of the shear surface 34BC is different from the appearance of the fracture surface 34BD.

The second cut surface 38B includes a second shear surface 38BC and a second fracture surface 38BD. The second shear surface 38BC is adjacent to the second shear surface 38BC in the first direction D1. The second sheared surface 38BC is a surface formed by shearing the material by the punch and the die during the shearing process, and includes a plurality of streaks extending in one direction (for example, the first direction D1). The second fracture surface 38BD is a surface formed by fracture after a part of the material is sheared by the punch and the die during the shearing process, and includes fine irregularities. Therefore, the appearance of the second shear surface 38BC is different from the appearance of the second fracture surface 38BD.

As shown in FIG. 10, the length of the second shear surface 38BC in the first direction D1 is different from the length of the shear surface 34BC in the first direction D1. The length of the second fracture surface 38BD in the first direction D1 is different from the length of the fracture surface 34BD in the first direction D1. Therefore, the appearance of the second cut surface 38B is different from the appearance of the second conductor connecting portion side surface 34BS. The second cut surface 38B may be a surface finished after the coupling portion 39 is cut from the bar bent body 32. Similarly, the second conductor connecting portion side face 34BS may be a face that has been surface finished. When the second cut face 38B is provided with a surface finish, the second shear face 38BC and the second fracture face 38BD are at least partially replaced by the finished face. When the second conductor connecting side 34BS is surface finished, the sheared edge surface 34BC and the fracture surface 34BD are at least partially replaced by the finished surfaces. Therefore, the appearance of the second cut surface 38B may be the same as the appearance of the second conductor connecting portion side surface 34BS.

Referring to FIGS. 3 to 5, the lead block body 31 has a first surface 31S1 facing toward the first direction D1 and a second surface 31S2 facing toward the first direction D1. The second surface 31S2 is provided on the back side of the first surface 31S1 in the first direction D1. The lead block body 31 has a first opening 31H1 provided on the first surface 31S1. In detail, the lead block body 31 has two first opening side 31H1. The two first opening 31H1 are shown by distinguishing from each other by the reference numerals 31H11 and 31H12. The first opening 31H11 and the first opening 31H12 have substantially the same shape. The lead block body 31 has a second opening 31H2 provided on the second surface 31S2. In detail, the lead block body 31 has two second opening side 31H2. The two first opening 31H2 are shown by distinguishing from each other by the reference characters 31H21 and 31H22. The second opening 31H21 and the second opening 31H22 have substantially the same shape.

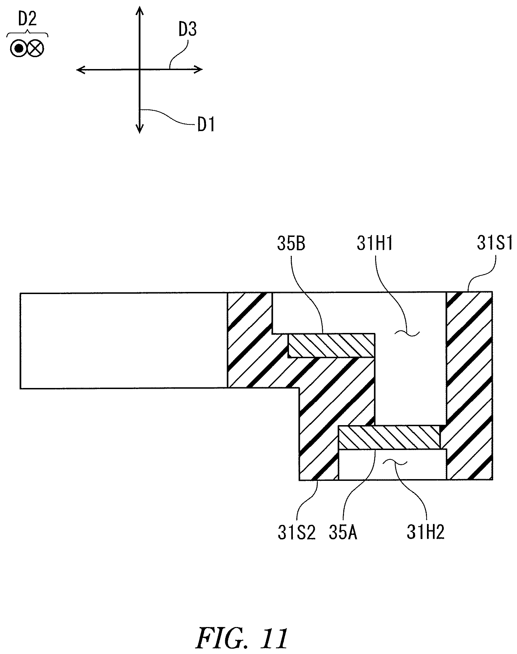

Referring to FIGS. 3, 4, and 11, at least one of the first intermediate portion 35A and the second intermediate portion 35B is at least partially exposed from the first opening 31H1 when viewed in the first direction D1. More particularly, the first intermediate portion 35A and a second intermediate portion side 35B exposes partially from the first opening 31H1 when viewed in the first direction D1. More particularly, the first intermediate portion 35A and the second intermediate portion 35B is partially exposed from the first opening 31H1 when viewed in the first direction D1. Referring to FIG. 11, the first intermediate portion 35A exposed from the first opening may be disposed to at least partially overlap the second intermediate portion 35B when viewed in the first direction D1. The first intermediate portion 35A exposed from the first opening is disposed so as to partially overlap the second intermediate portion 35B when viewed in the first direction D1.

At least one of the first intermediate portion 35A and the second intermediate portion 35B is at least partially exposed from the second opening 31H2 when viewed in the first direction D1. The first intermediate portion 35A is at least partially exposed from the second opening 31H2 when viewed in the first direction D1. To be specific, the first intermediate portion 35A is partially exposed from the second opening 31H2 when viewed in the first direction D1. The second intermediate portion is not exposed from the second opening when viewed in the first direction.

Referring to FIGS. 3 to 5, the lead block body 31 has a through hole TH disposed between the first cut surface 38A and the second cut surface 38B when viewed in the first direction D1 and penetrating the second cut surface 38B. The through hole TH is defined by a substantially O-shaped rib 42.

The lead block body has a third opening 31H3 and the fourth opening 31H4. Referring to FIG. 3, the third opening 31H3 and the fourth opening 31H4 sandwich the rib 42 when viewed in the first direction D1, and penetrate the lead block body 31 in the first direction D1. The third exposed surface 36AQ is exposed from the third opening 31H3 when viewed in the first direction D1. The fourth exposed surface 36BQ is exposed from the fourth opening 31H4 when viewed in the first direction D1. When the conductors are welded to the first conductor connecting portion 34A and the second conductor connecting portion 34B, heat is dissipated via the third opening 31H3 and the fourth opening 31H4.

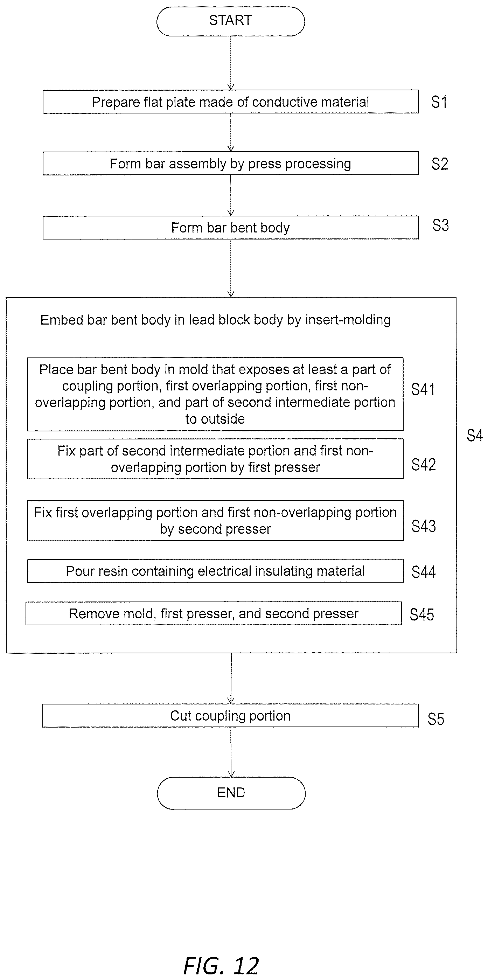

A method of manufacturing the lead block 30 will be described with reference to FIG. 12. As shown in FIG. 12 and FIG. 13, the method of manufacturing the lead block 30 includes a process S1 for preparing a flat plate 100 which contains a conductive material and has a longitudinal direction DL, a lateral direction DW, and a thickness direction DT which are perpendicular to each other. The manufacturing method further includes a punching step S2 of punching the bar assembly 110 from the flat plate 100.

As shown in FIG. 13, the bar assembly 110 includes a first bus bar 32A including a first connection pin 33A, a first conductor connecting portion 34A, a first intermediate portion 35A, and a bent portion 41, a second bus bar 32B including a second connection pin 33B, a second conductor connecting portion 34B, and a second intermediate portion 35B, and a coupling portion 39. The first connection pin 33A extends in the longitudinal direction DL. The bent portion 41 extends from the first conductor connecting portion 34A in the lateral direction DW. The first intermediate portion 35A extends from the bent portion 41 in the longitudinal direction DL and is connected to the first connection pin 33A. The second connection pin 33B extends in the longitudinal direction DL. The second intermediate portion 35B couples the second connection pin 33B and the second conductor connecting portion 34B and extends in the longitudinal direction DL. The coupling portion 39 couples the first conductor connecting portion 34A and the second conductor connecting portion 34B, and has a length in the lateral direction DW that is shorter than the length of the first conductor connecting portion 34A in the lateral direction DW and the length of the second conductor connecting portion 34B in the lateral direction DW.

In the bar assembly 110, the first connection pin 33A and the second connection pin 33B are arranged in the lateral direction DW, and the first conductor connecting portion 34A, the coupling portion 39, and the second conductor connecting portion 34B are arranged in the longitudinal direction DL. The bar assembly 110 is formed such that all of the distance in the lateral direction DW between the first connection pin 33A and the second connection pin 33B, the distance in the lateral direction DW between the first intermediate portion 35A and the second intermediate portion 35B, and the distance in the longitudinal direction DL between the bent portion 41 and the second conductor connecting portion 34B are all set to be equal to or smaller than the distance in the longitudinal direction DL between the coupling portion 39.

As shown in FIGS. 6 to 8 and 12, the method of manufacturing the lead block 30 includes a bending step S3 of bending the bent portion 41 of the bar assembly 110 in the thickness direction DT to form the bar bent body 32 (see FIGS. 6 to 8). As illustrated in FIG. 7, in the bar bent body 32, the first intermediate portion 35A and the second intermediate portion 35B partially overlap each other when viewed in the first direction D1 in which the first connection pin 33A and the second connection pin 33B are arranged.

As shown in FIG. 12, the method of manufacturing the lead block 30 includes a molding process S4 in which the bar bent body 32 is embedded in the lead block body 31 by insert-molding. The mold exposes a first overlapping portion of the first intermediate portion overlapping with the second intermediate portion in the first direction, a first non-overlapping portion of the first intermediate portion adjacent to the first overlapping portion, and a part of the second intermediate portion to the outside. Placing the bar bent body in a mold that exposes at least a portion of the connecting portion to the outside and molding a lead block body by a resin containing an electric insulating material,

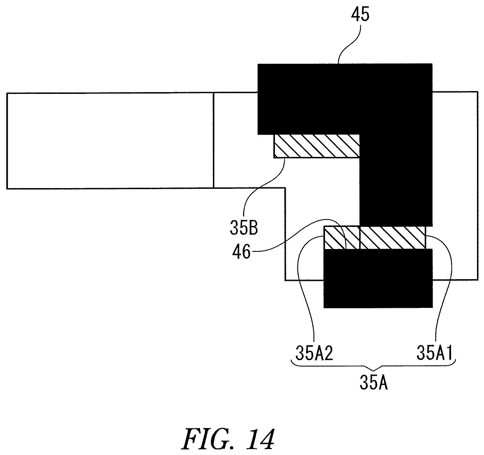

As illustrated in FIGS. 12 and 14, the molding process S4 includes the second intermediate portion 35B and a process S42 of fixing the first non-overlapping portion S35A1 by the first presser 45. The molding process S4 includes a process S43 of fixing the first overlapping portion 35A2 and the first non-overlapping portion 35A1 by the second presser 46. The first presser 45 occupies a region where the first opening 31H1 is formed after forming. The second presser 46 occupies a region where the second opening 31H2 is formed after the forming. Since the first bus bar 32A is bent, the arrangement and posture adjustment are greatly required, whereas since the second bus bar 32B is not bent, the arrangement and posture adjustment are not so much required. Therefore, the first intermediate portion 35A is sandwiched between the first presser 45 and the second presser 46 to adjust the alignment of the first bus bar 32A, while the second intermediate portion 35B is supported by the first presser 45, so that the amount of resins for molding can be reduced and the lead block 30 can be made compact.

As shown in FIG. 12, the molding process S4 includes a process S44 to cast resin including electrical insulating material into a mold and a process S45 for molding the lead block body 31 by removing the molding die, the first presser 45 and the second presser 46.

As shown in FIG. 12, the method of manufacturing the lead block 30 includes a process S5 of cutting the coupling portion 39 to electrically insulate the first bus bar 32A and the second bus bar 32B from each other. To be more specific, in the process S5, the cut piece 43 (see FIG. 13) of the coupling portion 39 is cut, and the first protruding portion 39A and the second protruding portion 39B are formed by the remaining coupling portion 39.

In this manner, the lead block 30 is manufactured.

As described above, the lead block 30 includes the lead block body 31, the first bus bar 32A, and the second bus bar 32B. The lead block body 31 includes an electrical insulating material. The first bus bar 32A and the second bus bar 32B are partially disposed in the lead block body 31 and include a conductive material. The first bus bar 32A includes a first connection pin 33A which is exposed from the lead block body 31 and electrically connectable to the connector CNT of the external electric cable EXT, and the first conductor 71A which is exposed from the lead block body 31 and electrically connected to the first conductor 71A of the first conductor connecting portion 34A of the electric cable 71. The first bus bar 32A includes a first connection pin 33A which is exposed from the lead block body 31 and electrically connectable to the connector CNT of the external electric cable EXT, and the first conductor 71A which is exposed from the lead block body 31 and electrically connected to the first conductor 71A of the first conductor connecting portion 34A of the electric cable 72. The first connection pin 33A and the second connection pin 33B are arranged in the first direction D1. The first conductor connecting portion 34A includes a first exposed surface 36AP facing toward the first direction D1, a first connecting portion 37A provided on the first exposed surface 36AP and configured to be electrically connected to the first conductor connecting portion 34A of the electric cable 71, and a first cut surface facing the second conductor connecting portion 34B. The second conductor connecting portion 34B includes a second exposed surface 36BP facing toward the first direction D1, a second connecting portion 37B provided on the second exposed surface 36BP and configured to be electrically connected to the second conductor 72A of the electric cable 72, and a second cut surface 38B facing the first cut surface 38A and disposed apart from the first cut surface 38A.

In the lead block 30, the first conductor connecting portion 34A and the second conductor connecting portion 34B are exposed in the same direction as the arrangement direction of the first connection pin 33A and the second connection pin 33B, and the first connection pin 33A and the second connection pin 33B are not located on the same plane. Therefore, the first bus bar 32A is bent between the first conductor connecting portion 34A and the first connection pin 33A, but as the first conductor connecting portion34A and the second conductor connecting portion 34B are on the same plane, the first bus bar 32A and the second bus bar 32B can be easily positioned with respect to the lead block body 31 with reference to the first conductor connecting portion 34A and the second conductor connecting portion 34B.

The method of manufacturing the lead block 30 includes preparing a flat plate 100 made of a conductive material and having a longitudinal direction DL, a lateral direction DW, and a thickness direction DT perpendicular to each other. The manufacturing method includes punching a bar assembly 110 from the flat plate from the flat plate 100, the bar assembly 100 comprising: a first bus bar 32A; a second bus bar 32B; and a coupling portion 39, the first bus bar 32A comprising: a first connection pin 33A extending in the longitudinal direction DL and electrically connectable to the connector CNT of the external electric cable EXT; a first conductor connecting portion 34A configured to be electrically connected to the first conductor 71A of the electric cable 71; a bent portion 41 extending from the first conductor connecting portion 34A in the lateral direction DW; and an intermediate portion 35A extending from the bent portion 41 in the longitudinal direction DL to couple a first connection pin 33A and the first conductor connecting portion 34A, the second bus bar 32B comprising: a second connection pin 33B extending in the longitudinal direction DL and electrically connectable to the connector CNT of the external electric cable EXT; a second conductor connecting portion 34B configured to be electrically connected to the second conductor 72A of the electric cable 72; an intermediate portion 35A extending in the longitudinal direction DL to couple a second connection pin 33B and the second conductor connecting portion 34B, the coupling portion 39 being configured to couple the first conductor connecting portion 34A and the second connection pin 33B and having a width in the lateral direction DW that is shorter than the width of the first conductor connecting portion 34A in the lateral direction DW and the width of the second conductor connecting portion 34B in the lateral direction DW, the first connection pin 33A and the second connection pin 33B being aligned in the lateral direction DW in the bar assembly 110, the first conductor connecting portion 34A, the coupling portion 39, and the second conductor connecting portion 34B being aligned in the longitudinal direction DL in the bar assembly 110. The manufacturing method includes bending the bent portion 41 of the bar assembly 110 in the thickness direction DT to form the bar bent body 32. The manufacturing method includes placing the bar bent body 32 in a mold that exposes at least a portion of the coupling portion 39 externally, and molding the lead block body 31 by a resin containing the electrical insulating material. The manufacturing method includes cutting the coupling portion 39 to electrically insulate the first bus bar 32A and the second bus bar 32B from each other.

In this method of manufacturing the lead block 30, since the coupling portion 39 is cut after the lead block body 31 is molded, the lead block body 31 is easily molded, and the first bus bar 32A and the second bus bar 32B can be accurately aligned.

Further, the lead block 30 includes a lead block body 31, a first bus bar 32A, and a second bus bar 32B. The lead block body 31 includes an electrical insulating material. The first bus bar 32A and the second bus bar 32B are partially disposed in the lead block body 31 and include a conductive material. The first bus bar 32A includes a first connection pin 33A exposed from the lead block body 31 and electrically connectable to the connector CNT of the external electric cable EXT, a first conductor connecting portion 34A exposed from the lead block body 31 to be electrically connected to the first conductor 71A of the electric cable 71, and a first intermediate portion 35A connecting the first connection pin 33A and the first conductor connecting portion 34A. The second bus bar 32B includes a second connection pin 33B exposed from the lead block body 31 and electrically connectable to the connector CNT of the external electric cable EXT, a second conductor connecting portion 34B exposed from the lead block body 31 to be electrically connected to the second conductor 72A of the electric cable 72, and a second intermediate portion 35B connecting the second connection pin 33B and the second conductor connecting portion 34B. The first connection pin 33A and the second connection pin 33B are arranged in the first direction D1. The first conductor connecting portion 34A includes a first exposed surface 34AP facing toward the first direction D1, and a first connecting portion 37A provided on the first exposed surface 34AP and configured to be electrically connected to the first conductor 71A of the electric cable 71. The second conductor connecting portion 34B includes a second exposed surface 34BP facing toward the first direction D1, and a second connecting portion 37B provided on the second exposed surface 36BP and configured to be electrically connected to the second conductor 72A of the electric cable 72. The lead block body 31 has a first opening 31H1. At least one of the first intermediate portion 35A and the second intermediate portion 35B is at least partially exposed from the first opening 31H1 when viewed in the first direction D1.

In the lead block 30, when the lead block body 31 is molded, a jig for fixing at least one of the first intermediate portion 35A and the second intermediate portion 35B can be attached to the first opening 31H1, and thus the accuracy of alignment can be improved.

The method of manufacturing the lead block 30 includes preparing a flat plate 100 made of a conductive material and having a longitudinal direction DL, a lateral direction DW, and a thickness direction DT perpendicular to each other. The manufacturing method includes a first connection pin 33A electrically connected to the first connector CNT of the external electric cable EXT, a first conductor connecting portion 34A electrically connected to the first conductor 71A of the electric cable 71, a bent portion 41 extending from the first conductor connecting portion 34A in the lateral direction DW, a first bus bar 32A extending in the longitudinal direction DL from the bent portion 41 and including a first connection pin 33A and an intermediate portion 35A, a second connection pin 33B extending in the longitudinal direction and electrically connectable to the connector CNT of the external electric cable EXT, a second conductor connecting portion 34B electrically connected to the second conductor 72A of the electric cable 72, a second bus bar coupling the second connection pin 33B and the second conductor connecting portion 34B and including a second intermediate portion 35B extending in longitudinal direction DL, a coupling portion 39 coupling the first conductor connecting portion 34A and the second conductor connecting portion 34B and having a width in the lateral direction DW smaller than a width in the lateral direction DW of the first conductor connecting portion 34A and a width in the lateral direction DW of the second conductor connecting portion 34B, and includes punching the bar assembly 110, in which the first connection pin 33A and the second connection pin 33B are aligned in the lateral direction DW and the first conductor connecting portion 34A and the second connection pin 34B are aligned in the longitudinal direction DL, from the flat plate 100. The manufacturing method includes forming the bar bent body 32 by bending the bent portion 41 in the thickness direction DT such that the first intermediate portion 35A and the second intermediate portion 35B overlap each other when viewing the bar assembly 110 in the first direction D1 of which the first connection pin 33A and the second connection pin 33b are aligned. The manufacturing method includes placing the bar bent body 32 in a die that exposes, to the outside, at least a portion of the coupling portion 39, a first overlapping portion 35A2 of the first intermediate portion 35A that overlaps with a second intermediate portion 35B of the first intermediate portion 35A in the first direction D1, a first non-overlapping portion 35A1 of the first intermediate portion 35A adjacent to the first overlapping portion 35A2, and a portion of the second intermediate portion 35B. The manufacturing method includes fixing a portion of the second intermediate portion and the first non-overlapping portion 35A1 by the first retainer 45. The manufacturing method includes fixing a portion of the second intermediate portion and the first non-overlapping portion 35A1 by the first retainer 45. The manufacturing method includes fixing the first overlapping portion 35A2 and the first non-overlapping portion 35A1 by the second presser 46 on the opposite side of the first presser 45 in the first direction D1. The manufacturing method includes molding the lead block body 31 by pouring a resin containing the electrical insulating material into a mold and removing the mold, the first retainer 45, and the second retainer 46. The manufacturing method includes cutting the coupling portion 39 to electrically insulate the first bus bar 32A and the second bus bar 32B from each other.

In the method for manufacturing the lead block, the first bus bar 32A and the second bus bar 32B are fixed by the two retainers 45 and 46 when the lead block body 31 is molded, and are removed after the lead block body 31 is molded, and thus the lead block body 31 is easily molded, and the first bus bar 32A and the second bus bar 32B can be accurately aligned.

It should be noted that, in the present application, the term "comprise" and its derivatives are non-limiting terms that describe the presence of elements, and do not exclude the presence of other elements not described. This also applies to "have", "include" and their derivatives.

In the present application, ordinal numbers such as "first" and "second" are terms for simply identifying a configuration, and do not have other meanings (for example, a specific order or the like). For example, the presence of "a first element" does not imply the presence of "a second element", and the presence of "a second element" does not imply the presence of "a first element

In addition, the expressions "parallel", "orthogonal", and "coincident" in the present disclosure should not be strictly interpreted, and include the meanings of "substantially parallel", "substantially orthogonal", and "substantially coincident", respectively. In addition, other expressions regarding arrangement are not strictly interpreted

In addition, the expression "at least one of A and B" in the present disclosure includes, for example, any of (1) only A, (2) only B, and (3) both A and B. The expression "at least one of A, B and C" encompasses, for example, any of (1) A only, (2) B only, (3) C only, (4) A and B, (5) B and C, (6) A and C, and (7) all of A, B and C. In the present disclosure, the phrase "at least one of A and B" is not to be construed as "at least one of A and at least one of B

Obviously, numerous modifications and variations of the present invention are possible in light of the above teachings. It is therefore to be understood that within the scope of the appended claims, the invention may be practiced otherwise than as specifically described herein.

### Reference Signs List

2: rotary connector device
10: stator
20: rotator
30: lead block
31: lead block body
31H1: first opening
31H2: second opening
31H3: third opening
31H4: fourth opening
31S1: first surface
31S2: second surface
32: bar bent body
32A: first bus bar
32B: second bus bar
33A: first connection pin
33B: second connection pin
34A: first conductor connecting portion
34B: second conductor connecting portion
34BP: second exposed surface
35A: first intermediate portion
35A1: first non-overlapping portion
35A2: first overlapping portion
35B: second intermediate portion
36A: first main portion
36AP: first exposed surface
36AQ: third exposed surface
36B: second main portion
36BP: second exposed surface
36BQ: fourth exposed surface
37A: first connecting portion
37B: second connecting portion
38A: first cut surface
38B: second cut surface
39: coupling portion
39A: first protruding portion
39B: second protruding portion
40A: third protruding portion
40B: fourth protruding portion
41: bent portion
45: first presser
46: second presser
71: electric cable
71A: first conductor
72: electric cable
72A: second conductor
100: flat plate
10: bar assembly
A1: rotation axis
CNT: connector
D1: first direction
D2: second direction
D3: third direction
DL: longitudinal direction
DT: thickness direction
DW: lateral direction
EXT: external electric cable
WM1: first width
WM2: second width
WP1: first pin width
WP2: second pin width

## Claims

1. A lead block comprising:
a lead block body including an electrically insulating material; and
a first bus bar and a second bus bar partially disposed in the lead block body and including a conductive material,
the first bus bar comprising:
a first connection pin exposed from the lead block body to be electrically connectable to a connector of an external electric cable; and
a first conductor connecting portion exposed from the lead block body to be electrically connected to a first conductor of an electric cable; and
the second bus bar comprising:
a second connection pin exposed from the lead block body to be electrically connectable to the connector of the external electric cable; and
a second conductor connecting portion exposed from the lead block body to be electrically connected to a second conductive portion of the electric cable,
the first connection pin and the second connection pin being arranged in a first direction,
the first conductor connecting portion comprising:
a first exposed surface facing toward the first direction; and
a first connecting portion provided on the first exposed surface and configured to be electrically connected to the first conductor of the electric cable; and
the second conductor connecting portion comprising:
a second exposed surface facing toward in the first direction; and
a second connecting portion provided on the second exposed surface and configured to be electrically connected to the second conductor of the electric cable.

2. The lead block according to claim 1,
wherein the first conductor connecting portion and the second conductor connecting portion are spaced apart from each other in a second direction perpendicular to the first direction.

3. The lead block according to claim 2,
wherein the first conductor connecting portion includes:
a first main portion including the first exposed surface; and
a second protruding portion protruding in the second direction from the first main portion toward the second conductor connecting portion,
wherein the second conductor connecting portion includes:
a second main portion including the second exposed surface; and
a second protruding portion protruding in the second direction from the second main portion toward the first conductor connecting portion.

4. The lead block according to claim 3,
wherein the first protruding portion has a width which is narrower than a width of the first main portion in a third direction perpendicular to the first direction and the second direction, and
wherein the second protruding portion has a width which is narrower than a width of the second main portion in the third direction.

5. The lead block according to claim 4,
wherein the first protruding portion has a first cut surface, and
wherein the second protruding portion has a second cut surface.

6. The lead block according to claim 1,
wherein the first conductor connecting portion further includes a first cut surface facing the second conductor connecting portion, and
wherein the second conductor connecting portion further includes a second cut surface facing the first cut surface and disposed apart from the first cut surface.

7. The lead block according to any one of claims 1 to 6,
wherein the first connection pin and the second connection pin protrude from the lead block body in the second direction.

8. The lead block according to any one of claims 1 to 6,
wherein the first bus bar is disposed so as to at least partially overlap with the second bus bar when viewed in the first direction.

9. The lead block according to any one of claims 1 to 6,
wherein the lead block body has a through hole disposed between the first cut surface and the second cut surface when viewed in the first direction and penetrating in the first direction.

10. The lead block according to any one of claims 1 to 6,
wherein the first conductor connecting portion has a third exposed surface provided on a back side of the first exposed surface in the first direction,
wherein the second conductor connecting portion has a fourth exposed surface provided on a back side of the second exposed surface in the first direction,
wherein the lead block body includes a third opening and a fourth opening,
wherein the first exposed surface and the second exposed surface are exposed from the lead block body when viewed in the first direction,
wherein the third exposed surface is exposed from the third opening when viewed in the first direction, and
wherein the fourth exposed surface is exposed from a fourth opening when viewed in the first direction.

11. The lead block according to any one of claims 1 to 6,
wherein the first bus bar further includes a bent portion coupled to the first conductor connecting portion and bent from the first conductor connecting portion toward the first direction.

12. The lead block according to claim 1,
wherein the first bus bar further includes a first intermediate portion coupling the first connection pin and the first conductor connecting portion,
wherein the second bus bar further includes a second intermediate portion coupling the second connection pin and the second conductor connecting portion,
wherein the lead block body has a first opening, and
wherein at least one of the first intermediate portion and the second intermediate portion is at least partially exposed from the first opening when viewed in the first direction.

13. The lead block according to claim 12,
wherein the lead block body has a first surface facing toward the first direction and a second surface facing toward the first direction,
wherein the second surface is provided on a back side of the first surface in the first direction, and
wherein the first opening is provided on the first surface.

14. The lead block according to claim 13,
wherein the lead block body has a second opening provided on the second surface, and
wherein at least one of the first intermediate portion or the second intermediate portion is at least partially exposed from the second opening when viewed in the first direction.

15. The lead block according to claim 12,
wherein the first intermediate portion and the second intermediate portion are at least partially exposed from the first opening when viewed in the first direction.

16. The lead block according to claim 14,
wherein the first intermediate portion is at least partially exposed from the second opening when viewed in the first direction, and
wherein the second intermediate portion is not exposed from the second opening when viewed in the first direction.

17. The lead block according to claim 12,
wherein the first conductor connecting portion and the second conductor connecting portion are spaced apart from each other in a second direction perpendicular to the first direction.

18. The lead block according to claim 17,
wherein the first intermediate portion has a first width defined in a third direction perpendicular to the first direction and the second direction,
wherein the first connection pin has a first pin width defined in the third direction, and
wherein the first width is greater than the first pin width.

19. The lead block according to claim 17,
wherein the second intermediate portion has a second width defined in a third direction perpendicular to the first direction and the second direction,
wherein the second connection pin has a second pin width defined in the third direction, and
wherein the second width is greater than the second pin width.

20. The lead block according to claim 17,
wherein the first connection pin and the second connection pin protrude from the lead block body in the second direction.

21. The lead block according to claim 12,
wherein the first bus bar is disposed to at least partially overlap the second bus bar when viewed in the first direction.

22. The lead block according to claim 15,
wherein the first intermediate portion exposed from the first opening is disposed to at least partially overlap the second intermediate portion when viewed in the first direction.

23. A lead block manufacturing method comprising:
preparing a flat plate made of a conductive material, which has a longitudinal direction, a lateral direction, and a thickness direction perpendicular to each other;
punching a bar assembly from the flat plate, the bar assembly comprising:
a first bus bar comprising:
a first connection pin extending in the longitudinal direction and electrically connectable to a connector of an external electric cable;
a first conductor connecting portion configured to be electrically connected to the conductor of an electric cable;
a bent portion extending from the first conductor connecting portion in the lateral direction; and
an intermediate portion extending from the bent portion in the longitudinal direction to couple the connection pin and the first conductor connection portion;
a second bus bar comprising:
a second connection pin extending in the longitudinal direction and electrically connectable to a connector of the external electric cable;
a second conductor connecting portion configured to be electrically connected to a second conductor of the electric cable;
a second intermediate portion extending in the longitudinal direction to couple the second connection pin and the second conductor connection portion; and
a coupling portion configured to couple the first conductor connecting portion and the second conductor connecting portion, which has a width in the lateral direction shorter than a width of the first conductor connecting portion in the lateral direction and a width of the second conductor connecting portion in the lateral direction;
the first connection pin and the second connection pin being aligned in the lateral direction in the bar assembly; and
the first conductor connecting portion, the coupling portion, and the second conductor connecting portion being aligned in the longitudinal direction in the bar assembly;
bending the bent portion of the bar assembly in the thickness direction to form a bar bent body;
placing the bar bent body in a mold that exposes at least a portion of the coupling portion externally and molding a lead block body by a resin containing an electric insulating material; and
cutting the coupling portion to electrically insulate the first bus bar and the second bus bar from each other.

24. The manufacturing method according to claim 23,
wherein the bar assembly is formed such that a distance in the lateral direction between the first connection pin and the second connection pin, a distance in the lateral direction between the first intermediate portion and the second intermediate portion, and a distance in the longitudinal direction between the bent portion and the second conductor connecting portion are all equal to or less than a distance between the longitudinal direction and the coupling portion.

25. The lead block manufacturing method according to claim 23,
wherein the bar bent body is formed such that the first intermediate portion and the second intermediate portion partially overlap each other when viewed in a first direction in which the first connection pin and the second connection pin are arranged,
wherein the mold further exposes a first overlapping portion of the first intermediate portion that overlaps the second intermediate portion in the first direction, a first non-overlapping portion of the first intermediate portion adjacent to the first overlapping portion, and a portion of the second intermediate portion externally, and
wherein the lead block manufacturing method further includes:
fixing a part of the second intermediate portion and the first non-overlapping portion by a first presser;
fixing the first overlapping portion and the first non-overlapping portion by a second presser on an opposite side of the first presser in the first direction; and
molding the lead block body by pouring the resin into the mold and removing the mold, the first retainer, and the second retainer.

26. A rotary connector device comprising:
a stator;
a rotator provided to be rotatable about a rotation axis with respect to the stator;
the lead block according to any one of claims 1 to 6 or any one of claims 12 to 22; and
the electric cable electrically connected to the first connecting portion and the second connecting portion of the lead block.

27. A rotary connector device comprising:
a stator;
a rotator provided to be rotatable about a rotation axis with respect to the stator;
the lead block manufactured by the manufacturing method according to any one of claims 23 to 25; and
the electric cable electrically connected to the first connecting portion and the second connecting portion of the lead block.
